# EUROPEAN PATENT SPECIFICATION

(11) **EP 1 492 698 B1**
(45) Date of publication and mention of the grant of the patent: **15.02.2006**
(21) Application number: 03721604.1
(22) Date of filing: 10.04.2003
(51) Int. Cl.: B62M 25/04, B62K 23/04

(54) **BICYCLE GEAR INDICATOR MECHANISM**
ANZEIGEMECHANISMUS EINER FAHRRADGANGSCHALTUNG
MECANISME INDICATEUR DE DERAILLEUR DE BICYCLETTE

(30) Priority: 10.04.2002 US 319179 P
(43) Date of publication of application: 05.01.2005
(73) Proprietor: SRAM CORPORATION, Chicago, Illinois 60622 (US)
(72) Inventor: FLORCZYK, Raymond, 97525 Schwebheim (DE); AUER, Marcus, 97525 Schwebheim (DE); BUETTNER, Christian, 97072 Würzburg (DE); CHEN, Hung-I, 406 Taichung City (TW)
(74) Representative: Prechtel, Jörg
(86) International application number: PCT/US2003/010979
(87) International publication number: WO 2003/086849

(56) References cited:
- EP-A- 0 423 779
- EP-A- 0 759 393
- EP-A- 0 763 463
- DE-A- 10 001 084
- DE-A- 10 009 214
- DE-U- 20 107 679
- FR-A- 1 538 932

## Description

### Technical Field

This invention relates to a rotatable handgrip shifting device according to the preamble of claim 1 and to a method according to claim 8.

### Background Of Invention

Bicycle gear shifting systems include a shifting device connected by a cable within a tube to a gear changing device such as a derailleur or an internal gear hub. Such devices are described in U.S. Patent Nos. 5,476,019,5,524,501, and 5,662,000, also owned by the assignee of this invention.

Document DE 100 01 084 A discloses in one embodiment a rotatable handgrip shifting device according to the preamble of claim 1. In order to permit the alignment of a pointer with a plurality of discrete shift points indicated on the display, the handgrip shifting device according to this embodiment provides a flexible member having at its first end the pointer and at its second end a toothing that meshes with a toothing of a rotational sleeve of the rotatable handgrip. Upon rotation of the sleeve about the axis defined by the handlebar, the flexible member is brought into a rotational movement about an axis extending in a plane which is substantially perpendicular to the handlebar axis, wherein the flexible member is guided by a curved guiding groove formed by the housing of the shifting device. Furthermore, based on this toothing between the flexible member and the rotational sleeve, document DE 100 01 084 A discloses other embodiments which differ from each other with respect to the displays.

In conventional bicycle gear shifting systems, the spacing of the detent notches is generally dictated by the gear changing mechanism used. Typically, a gear changing mechanism that doubles the spacing of the detent notches may double the stroke of the pointer along the display of a gear indicator, thereby lengthening the display window. It is therefore the object of the invention to create a gear indicator mechanism allowing control of the stroke of the pointer along the display regardless of the particular gear changing mechanism used.

This object is solved by a handgrip shifting device according to claim 1.

Accordingly there is provided a rotatable handgrip shifting device mountable on a bicycle handlebar to be connected to an associated bicycle gear changing mechanism by a cable within a tube. The shifting device is reversibly operable at discrete shift points corresponding to the gears of the bicycle gear changing mechanism. The shifting devices comprises a handgrip rotatable about an axis defined by the handlebar, a spool rotatable with the handgrip, a housing securable to the handlebar and including a gear display indicating a plurality of discrete shift points of the gear changing mechanism, and a flexible member having a pointer at a first end and a tab at a second end. The flexible member is configured such that the pointer is reciprocally displaceable along the gear display in response to rotation of the handgrip thereby permitting alignment of the pointer with the plurality of discrete shift points indicated on the gear display. The tab is removably attachable to the spool or the handgrip.

According to the invention the spool or handgrip are configured such that the flexible member spools about the handlebar axis. On basis of an appropriate radius of spooling about the handlebar axis the stroke of the pointer along the display can appropriately be controlled, to fit to a respective gear changing mechanism to be used with the handgrip shifting device.

To facilitate the provision of rotatable handgrip shifting devices to be used with respective different gear changing mechanisms the invention further proposes that i) the spooling is allowed at one of a first radius and a second radius with respect to the handlebar axis, depending on whether the flexible member has a tab according to a first configuration associated to the first radius or a tab according to a second configuration associated to the second radius, the gear display being adapted to the configuration of the tab of the flexible member to permit alignment of the pointer with the plurality of discrete shift points indicated on the gear display, and that ii) at least the flexible member and the gear display are interchangeable allowing alternatively the use of a first flexible member having as tab a first tab according to the first configuration together with a first gear display indicating a first plurality of discrete shift points associated to a first gear changing mechanism or of a second flexible member having as tab a second tab according to the second configuration together with a second gear display indicating a second plurality of discrete shift points associated to a second gear changing mechanism.

Accordingly a first handgrip shifting device associated with a first gear changing mechanism and a second handgrip shifting device associated with a second gear changing mechanism can easily be provided on basis of the same major structural components, i.e. the same handgrip, the same spool and the same housing, just by combining these components with a first flexible member and a first display associated with the first gear changing mechanism and with a second flexible member and a second display associated with a second gear changing mechanism, respectively.

These and other features and advantages of the invention will be more fully understood from the following description of certain embodiments of the invention taken together with the accompanying drawings.

### Brief Description of Drawings

In the drawings:
FIG. 1 is a top view of a rotatable handgrip shifting device in accordance with one embodiment of the present invention;
FIG. 2 is an exploded isometric view of the shifting device of FIG. 1;
FIG. 3 is a partially exploded isometric view of the shifting device of FIG. 1;
FIG. 4 is a detail isometric view of the embodiment of the shifting device of FIG. 1; and
FIG. 5 is a detail isometric view of another embodiment of the shifting device of the present invention.

### Detailed Description

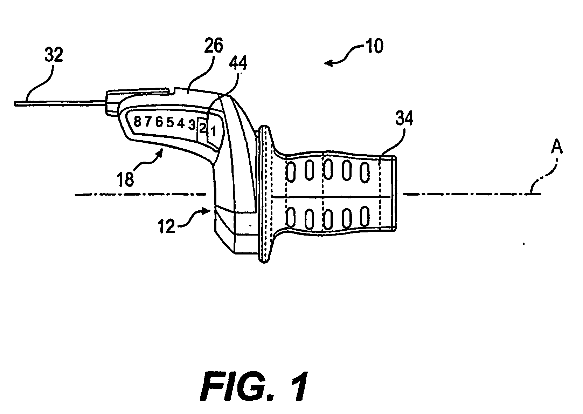

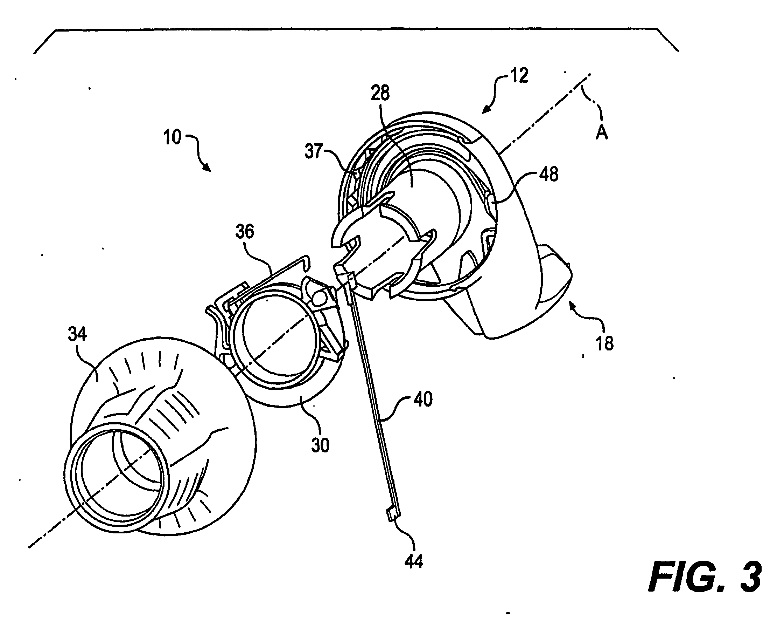

Referring to FIGS. 1-3 of the drawings, numeral 10 generally indicates a handgrip shifting device rotatable about a handlebar axis A. The shifting device 10 includes a housing 12 that is secured to a bicycle handlebar (not shown) by a clamp 14 and a set screw 16. The housing 12 includes a gear indicator 18 generally located at or near a cable inlet or noodle 26. The gear indicator 18 includes a clear display 20 mounted within a display window 22 of a display cover 24 mounted on the housing 12. A plurality of gear indicator numbers are viewable through the display window 22. Although a linear display 20 is shown in figures, alternative display configurations are possible including circular or arched displays.

The housing 12 further includes a tubular mandrel 38 projecting along the handlebar axis A. A spool 30 is rotatable mountable on the mandrel 28. A first end of a control cable 32 is connected to a gear changing mechanism (not shown). A second end of the control cable 32 is routed through the noodle 26 of the housing 12 and attached to the spool 30. A handgrip 34 is likewise rotatably mounted on the mandrel 28 of the housing 12, the spool 30 rotatable with the handgrip 34. Although spool 30 is shown to be coaxially rotatable about an axis offset from the handlebar axis A. One end of a detent spring 36 is mounted on the spool 30. A free end of the detent spring 36 being engageable with an array of detent notches 37 located circumferentially about an inner surface of a wall 38 of the housing 12. The location of the array of detent notches 37 being interchangeable with the location of the end of the detent spring 36 mounted on the spool 30. Additional detenting configurations between the spool 30, detent spring 36, notches 37, and housing 12 exist to discretely position handgrip 34. Rotation of the handgrip 34 by a rider causes rotation of the spool 30 thereby moving the free end of the detent spring 36 from one notch to another notch, the spacing of the notches generally dictated by the spacing of the gears in the gear changing mechanism. Although in the shown embodiment of the spool 30 is discrete from the handgrip 34, in alternative embodiments the spool 30 may be integral to the handgrip 34.

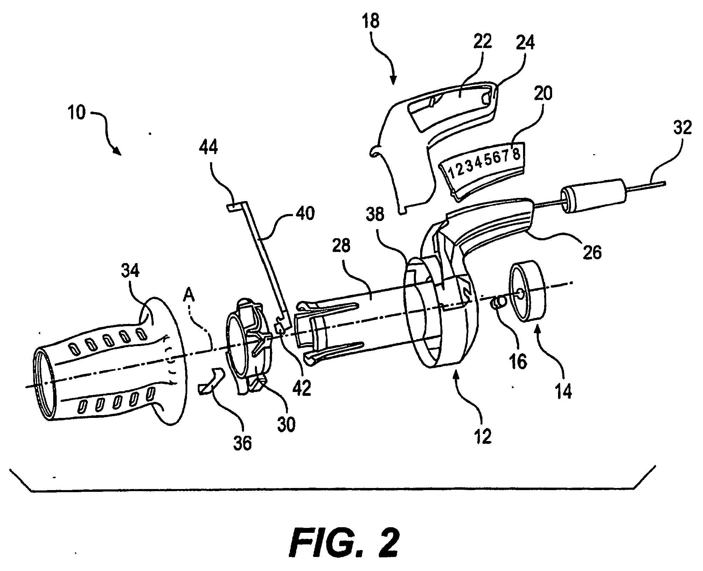

As shown in FIGS. 2-5, a flexible member 40 includes a spool tab 42 and a pointer 44. The spool tab 42 is removably attachable to a slot 46 located on the spool 30 or alternatively on the handgrip 34. The pointer 44 of the flexible member 40 is routed through an aperture 48 in the housing 12 and into the noodle 26 to be viewable along the display 20. Rotation of the handgrip 34 reciprocally displacing the pointer 44 along the display 20 as the flexible member 40 is spooled about the mandrel 28 of the housing 12.

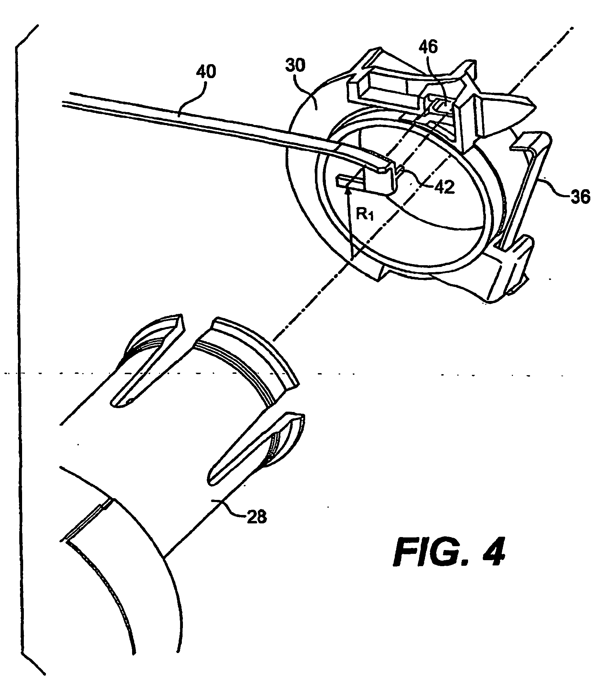

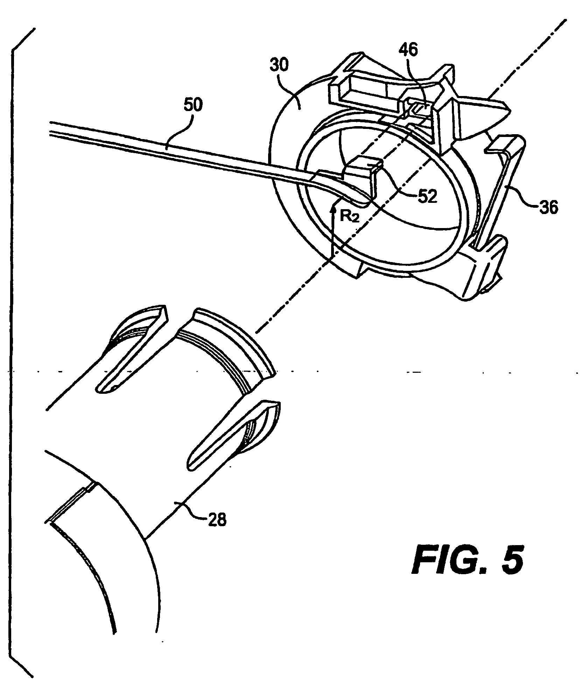

As further shown in FIGS. 4 and 5, the spool tab 42 of the flexible member 40 may be alternatively configured to cause the flexible member 40 to be spooled about the mandrel 28 at varying radii. In the embodiment of FIG. 4, a spool tab 42, insertable in the slot 46, causes the flexible member 40 to be spooled at a larger radius R1. Alternatively, in the embodiment of FIG. 5, a spool tab 52, insertable in the slot 46, causes the flexible member 50 to be spooled at a smaller radius R2. By varying the radius at which the flexible member 40 is spooled about the mandrel 28, one may control the stroke of the pointer 44 along the display 20 for any given gear changing mechanism. In doing so, the spacing of the gear indicator numbers along the display may also be controlled.

As shown in FIGS. 1-5, the gear indicator 18 is generally located along or proximate the noodle 26 of the housing 12 and orientated to maximize viewability of the display 20 by the rider. Additionally, location of the gear indicator 18 along or near the noodle 26 allows for compact packaging of the gear indicator 18 within the housing 12.

It is intended that the invention not be limited to the disclosed embodiments, but that it have the full scope permitted by the language of the following claims.

## Claims

1. A rotatable handgrip shifting device mountable on a bicycle handlebar and to be connected to an associated bicycle gear changing mechanism by a cable (32) within a tube and reversibly operable at discrete shift points corresponding to the gears of the bicycle gear changing mechanism, the shifting device (10) comprising:
- a handgrip (34) rotatable about an axis (A) defined by the handlebar;
- a spool (30) rotatable with the handgrip;
- a housing (12) securable to the handlebar and including a gear display (20) indicating a plurality of discrete shift points of the gear changing mechanism, and
- a flexible member (40; 50) having a pointer (44) at a first end and a tab (42) at a second end,
wherein the flexible member (40; 50) is configured such that the pointer (44) is reciprocally displaceable along the gear display (20) in response to rotation of the handgrip (34) thereby permitting alignment of the pointer (44) with the plurality of discrete shift points indicated on the gear display (20), and wherein the tab (42) is removably attachable to one of said spool (30) and said handgrip (34),
**characterized in that**
said spool (30) or handgrip (34) being configured such that the flexible member (40; 50) spools about the axis (A) at one of a first radius (R1) and a second radius (R2) with respect to the axis (A), depending on whether said flexible member (40; 50) has a tab (42) according to a first configuration associated to said first radius (R1) or a tab (52) according to a second configuration associated to said second radius (R2), said gear display (20) being adapted to the configuration of the tab (42; 52) of the flexible member (40) to permit alignment of the pointer (44) with the plurality of discrete shift points indicated on the gear display (20); and
said flexible member (40; 50) and said gear display (20) being interchangeable allowing alternatively the use of a first flexible member having as tab a first tab (42) according to the first configuration together with a first gear display indicating a first plurality of discrete shift points associated to a first gear changing mechanism or of a second flexible member having as tab a second tab (52) according to the second configuration together with a second gear display indicating a second plurality of discrete shift points associated to a second gear changing mechanism.

2. The rotatable handgrip shifting device of claim 1, wherein said flexible member (40; 50) extends between said spool (30) and said gear display (20).

3. The rotatable handgrip shifting device of claim 1, wherein said flexible member (40; 50) extends between said handgrip (34) and said gear display (20).

4. The rotatable handgrip shifting device of claim 1, wherein said spool (30) has a slot (46) for receiving said tab (42; 52).

5. The rotatable handgrip shifting device of claim 1, wherein said handgrip has a slot for receiving said tab.

6. The rotatable handgrip shifting device of claim 1, wherein said housing (12) includes a cable inlet (26) for receiving the cable (32) and the gear display (20) substantially located at said cable inlet (26) of said housing (12).

7. The rotatable handgrip shifting device of claim 1, wherein said housing (12) includes a cable inlet (26) for receiving the cable (32) and the gear display (20) located above said cable inlet (26) of said housing (12).

8. A method for adapting a shifting device (10) for use with different gear change mechanisms, the shifting device (10) having a housing secured to a handlebar, a handgrip (34) rotatable about the handlebar and a spool (30) rotatable with the handgrip (34), said method comprising the steps of:
providing a first flexible member (40) a first gear display (20) and a first gear changing mechanism, the first flexible member (40) having a first pointer (44) at a first end and a first tab (42) at a second end, the first flexible member (40) configured such that the first pointer (44) is reciprocally displaceable along the first gear display (20) in response to rotation of the handgrip (34), the first tab (42) being removably attachable to one of said spool (32) and said handgrip (34), the first flexible member (40) configured to spool at a first radius (R1) in response to rotation of the handgrip (34), the first gear display (20) indicating a first plurality of discrete shift points of the first gear changing mechanism;
providing a second flexible member (50), a second gear display and a second gear changing mechanism, the second flexible member (50) having a second pointer at a first end and second tab (52) at a second end, the second flexible member (50) configured such that the second pointer is reciprocally displaceable along the second gear display in response to rotation of the handgrip the second tab (52) being removably attachable to one of said spool (32) and said handgrip, (34) the second flexible member (50) configured to spool at a second radius (R2) in response to rotation of the handgrip (34), the second gear display indicating a second plurality of discrete shift points of the second gear changing mechanism;
removing the first flexible member, (40) the first gear display (20) and the first gear changing mechanism; and
inserting the second flexible member (50), the second gear display and the second gear changing mechanism.

## Patentansprüche

1. Drehbare Handgriffschaltvorrichtung, welche an einer Fahrradlenkstange anbringbar ist und mit einem zugeordneten Fahrradgangwechselmechanismus über ein Kabel (32) in einem Rohr zu verbinden ist und an diskreten, den Gängen des Fahrradgangwechselmechanismus entsprechenden Schaltpunkten umschaltbar betätigbar ist, wobei die Schaltvorrichtung (10) umfasst:
- einen um eine durch die Lenkstange definierte Achse (A) drehbaren Handgriff (34);
- eine mit dem Handgriff drehbare Spule (30);
- ein Gehäuse (12), welches an der Lenkstange befestigbar ist und eine Ganganzeige (20) enthält, welche mehrere diskrete Schaltpunkte des Gangwechselmechanismus anzeigt, und
- ein flexibles Glied (40; 50) mit einem Zeiger (44) an einem ersten Ende und einer Lasche (42) an einem zweiten Ende,
wobei das flexible Glied (40; 50) derart konfiguriert ist, dass der Zeiger (44) entlang der Ganganzeige (20) wechselseitig verschiebbar ist in Reaktion auf eine Drehung des Handgriffs (34), wodurch eine Ausrichtung des Zeigers (44) mit den mehreren diskreten Schaltpunkten, welche auf der Ganganzeige (20) angegeben sind, ermöglicht wird, und wobei die Lasche (42) lösbar an der Spule (30) oder am Handgriff (34) befestigbar ist,
**dadurch gekennzeichnet, dass**
die Spule (30) oder der Handgriff (34) derart konfiguriert sind, dass das flexible Glied (40; 50) um die Achse (A) mit einem bezogen auf die Achse (A) ersten Radius (R1) oder einem zweiten Radius (R2) spult, abhängig davon, ob das flexible Glied (40; 50) eine Lasche (42) gemäß einer ersten, dem ersten Radius (R1) zugeordneten Konfiguration aufweist, oder eine Lasche (52) gemäß einer zweiten, dem zweiten Radius (R2) zugeordneten Konfiguration, wobei die Ganganzeige (20) an die Konfiguration der Lasche (42; 52) des flexiblen Glieds (40) angepasst ist, um die Ausrichtung des Zeigers (44) mit den mehreren diskreten, auf der Ganganzeige (20) angegebenen Schaltpunkten zu ermöglichen; und
wobei das flexible Glied (40; 50) und die Ganganzeige (20) austauschbar sind, wobei die alternative Verwendung eines ersten flexiblen Glieds, das als Lasche eine erste Lasche (42) gemäß der ersten Konfiguration aufweist, zusammen mit einer ersten Ganganzeige, welche eine erste Mehrzahl von diskreten, einem ersten Gangwechselmechanismus zugeordneten Schaltpunkten angibt, oder eines zweiten flexiblen Glieds, welches als Lasche eine zweite Lasche (52) gemäß der zweiten Konfiguration aufweist, zusammen mit einer zweiten Ganganzeige, welche eine zweite Mehrzahl von diskreten, einem zweiten Gangwechselmechanismus zugeordneten Schaltpunkten angibt, ermöglicht ist.

2. Drehbare Handgriffschaltvorrichtung nach Anspruch 1, wobei sich das flexible Glied (40; 50) zwischen der Spule (30) und der Ganganzeige (20) erstreckt.

3. Drehbare Handgriffschaltvorrichtung nach Anspruch 1, wobei sich das flexible Glied (40; 50) zwischen dem Handgriff (34) und der Ganganzeige (20) erstreckt.

4. Drehbare Handgriffschaltvorrichtung nach Anspruch 1, wobei die Spule (30) einen Schlitz (46) aufweist zum Aufnehmen der Lasche (42; 52).

5. Drehbare Handgriffschaltvorrichtung nach Anspruch 1, wobei der Handgriff einen Schlitz zum Aufnehmen der Lasche aufweist.

6. Drehbare Handgriffschaltvorrichtung nach Anspruch 1, wobei das Gehäuse (12) einen Kabeleinlass (26) enthält zum Aufnehmen des Kabels (32) und wobei die Ganganzeige (20) im Wesentlichen bei dem Kabeleinlass (26) des Gehäuses (12) angeordnet ist.

7. Drehbare Handgriffschaltvorrichtung nach Anspruch 1, wobei das Gehäuse (12) einen Kabeleinlass (26) enthält zum Aufnehmen des Kabels (32) und wobei die Ganganzeige (20) über dem Kabeleinlass (26) des Gehäuses (12) angeordnet ist.

8. Verfahren zum Anpassen einer Schaltvorrichtung (10) zur Verwendung mit unterschiedlichen Gangwechselmechanismen, wobei die Schaltvorrichtung (10) ein an einer Lenkstange befestigtes Gehäuse, einen um die Lenkstange drehbaren Handgriff (34) und eine mit dem Handgriff (34) drehbare Spule (30) aufweist, wobei das Verfahren die Schritte umfasst:
Bereitstellen eines ersten flexiblen Glieds (40), einer ersten Ganganzeige (20) und eines ersten Gangwechselmechanismus, wobei das erste flexible Glied (40) an einem ersten Ende einen ersten Zeiger (44) und an einem zweiten Ende eine erste Lasche (42) aufweist, wobei das erste flexible Glied (40) derart konfiguriert ist, dass der erste Zeiger (44) wechselseitig entlang der ersten Ganganzeige (20) verschiebbar ist in Reaktion auf eine Drehung des Handgriffs (34), wobei die erste Lasche (42) lösbar an der Spule (32) oder dem Handgriff (34) befestigbar ist, wobei das erste flexible Glied (40) derart konfiguriert ist, dass es in Reaktion auf die Drehung des Handgriffs (34) mit einem ersten Radius (R1) spult, wobei die erste Ganganzeige (20) eine erste Mehrzahl von diskreten Schaltpunkten des ersten Gangwechselmechanismus angibt;
Bereitstellen eines zweiten flexiblen Glieds (50), einer zweiten Ganganzeige und eines zweiten Gangwechselmechanismus, wobei das zweite flexible Glied (50) an einem ersten Ende einen zweiten Zeiger und an einem zweiten Ende eine zweite Lasche (52) aufweist, wobei das zweite flexible Glied (50) derart konfiguriert ist, dass der zweite Zeiger wechselseitig verschiebbar entlang der zweiten Ganganzeige ist in Reaktion auf die Drehung des Handgriffs, wobei die zweite Lasche (52) lösbar an der Spule (32) oder dem Handgriff (34) befestigbar ist, wobei das zweite flexible Glied (50) derart konfiguriert ist, dass es in Reaktion auf die Drehung des Handgriffs (34) mit einem zweiten Radius (R2) spult, wobei die zweite Ganganzeige eine zweite Mehrzahl von diskreten Schaltpunkten eines zweiten Gangwechselmechanismus angibt;
Entfernen des ersten flexiblen Glieds (40), der ersten Ganganzeige (20) und des ersten Gangwechselmechanismus; und
Einsetzen des zweiten flexiblen Glieds (50), der zweiten Ganganzeige und des zweiten Gangwechselmechanismus.

## Revendications

1. Dispositif rotatif de dérailleur sur poignée pouvant être monté sur un guidon de bicyclette et devant être connecté à un mécanisme associé de changement de rapport de bicyclette par un câble (32) à l'intérieur d'un tube et pouvant être actionné, de façon réversible, selon des points discrets de changement de rapport correspondant aux pignons dentés du mécanisme de changement de rapport de bicyclette, le dispositif de dérailleur (10) comprenant :
- une poignée (34) pouvant tourner autour d'un axe (A) défini par la poignée ;
- un corps cylindrique (30) pouvant tourner avec la poignée ;
- un boîtier (12) pouvant être fixé sur la poignée et comprenant un affichage de rapport (20) indiquant une pluralité de points discrets de changement de rapport du mécanisme de changement de rapport ; et
- une pièce flexible (40 ; 50) possédant un pointeur (44) à une première extrémité et une languette (42) à une seconde extrémité ;
dans lequel la pièce flexible (40 ; 50) est configurée de telle façon que le pointeur (44) puisse être déplacé, de façon alternée, le long de l'affichage de rapport (20) en réponse à une rotation de la poignée (34), permettant ainsi un alignement du pointeur (44) avec la pluralité de points discrets de changement de rapport indiqués sur l'affichage de rapport (20) et dans lequel la languette (42) peut être fixée de façon amovible sur un élément parmi ledit corps cylindrique (30) et ladite poignée (34) ;
**caractérisé en ce que** :
- ledit corps cylindrique (30) ou la poignée (34) est configuré de telle façon que la pièce flexible (40 ; 50) s'enroule autour de l'axe (A) selon un rayon parmi un premier rayon (R1) et un second rayon (R2) par rapport à l'axe (A) selon que ladite pièce flexible (40 ; 50) possède une languette (42) selon une première configuration associée audit premier rayon (R1) ou une languette (52) selon une seconde configuration associée audit second rayon (R2), ledit affichage de rapport (20) étant adapté à la configuration de la languette (42 ; 52) de la pièce flexible (40) pour permettre un alignement du pointeur (44) avec la pluralité de points discrets de changement de rapport indiqués sur l'affichage de rapport (20) ; et
- ladite pièce flexible (40 ; 50) et ledit affichage de rapport (20) sont interchangeables, permettant une utilisation alternée d'une première pièce flexible possédant comme languette une première languette (42) selon la première configuration en conjonction avec un premier affichage de rapport indiquant une première pluralité de points discrets de changement de rapport associés à un premier mécanisme de changement de rapport ou d'une seconde pièce flexible possédant comme languette une seconde languette (52) selon la seconde configuration en conjonction avec un second affichage de rapport indiquant une seconde pluralité de points discrets de changement de rapport associés à un second mécanisme de changement de rapport.

2. Dispositif rotatif de dérailleur à poignée selon la revendication 1, dans lequel ladite pièce flexible (40 ; 50) s'étend entre ledit corps cylindrique (30) et ledit affichage de rapport (20).

3. Dispositif rotatif de dérailleur à poignée selon la revendication 1, dans lequel ladite pièce flexible (40 ; 50) s'étend entre ladite poignée (34) et ledit affichage de rapport (20).

4. Dispositif rotatif de dérailleur à poignée selon la revendication 1, dans lequel ledit corps cylindrique (30) possède une fente (46) pour recevoir ladite languette (42 ; 52).

5. Dispositif rotatif de dérailleur à poignée selon la revendication 1, dans lequel ladite poignée possède une fente pour la réception de ladite languette.

6. Dispositif rotatif de dérailleur à poignée selon la revendication 1, dans lequel ledit boîtier (12) comprend une entrée de câble (26) pour recevoir le câble (32) et l'affichage de rapport (20) sensiblement positionné à ladite entrée de câble (26) dudit boîtier (12).

7. Dispositif rotatif de dérailleur à poignée selon la revendication 1, dans lequel ledit boîtier comprend une entrée de câble (26) pour recevoir le câble (32) et l'affichage de rapport (20) positionné au-dessus de ladite entrée de câble (26) dudit boîtier (12).

8. Procédé d'adaptation d'un dispositif de dérailleur (10) pour une utilisation avec différents mécanismes de changement de rapport, le dispositif de dérailleur (10) possédant un boîtier fixé sur un guidon, une poignée (34) pouvant tourner autour du guidon et un corps cylindrique (30) pouvant tourner avec la poignée (34), ledit procédé comprenant les étapes suivantes :
- la prévision d'une première pièce flexible (40), d'un premier affichage de rapport (20) et d'un premier mécanisme de changement de rapport, la première pièce flexible (40) possédant un premier pointeur (44) à une première extrémité et une première languette (42) à une seconde extrémité, la première pièce flexible (40) étant configurée de telle façon que le premier pointeur (44) puisse être déplacé, de façon alternée, le long du premier affichage de rapport (20) en réponse à une rotation de la poignée (34), la première languette (42) pouvant être fixée de façon amovible sur un élément parmi ledit corps cylindrique (32) et ladite poignée (34), la première pièce flexible (40) étant configurée pour s'enrouler selon un premier rayon (R1) en réponse à une rotation de la poignée (34), le premier affichage de rapport (20) indiquant une première pluralité de points discrets de rapport du premier mécanisme de changement de rapport ;
- la prévision d'une seconde pièce flexible (50), d'un second affichage de rapport et d'un second mécanisme de changement de rapport, la seconde pièce flexible (50) possédant un second pointeur à une première extrémité et une seconde languette (52) à une seconde extrémité, la seconde pièce flexible (50) étant configurée de telle façon que le second pointeur puisse être déplacé, de façon alternée, le long du second affichage de rapport en réponse à une rotation de la poignée (34), la seconde languette (52) pouvant être fixée de façon amovible sur une pièce parmi ledit corps cylindrique (32) et ladite poignée (34), la seconde pièce flexible (50) étant configurée pour s'enrouler selon un second rayon (R2) en réponse à une rotation de la poignée (34), le second affichage de rapport indiquant une seconde pluralité de points discrets de rapport du second mécanisme de changement de rapport ;
- l'enlèvement de la première pièce flexible (40), du premier affichage de rapport (20) et du premier mécanisme de changement de rapport ; et
- l'insertion de la seconde pièce flexible (50), du second affichage de rapport et du second mécanisme de changement de rapport.
